# EUROPEAN PATENT APPLICATION

(11) **EP 2 738 996 A1**
(43) Date of publication of application: **04.06.2014**
(21) Application number: 12306501.3
(22) Date of filing: 30.11.2012
(51) Int. Cl.: H04L 29/06, H04L 29/08

(54) **Method, device and system for accessing a server**

(71) Applicant: Gemalto SA, 92190 Meudon (FR)
(72) Inventor: Falcou, Cyrille, 13705 LA CIOTAT (FR)

(57) **Abstract**

The invention relates to a method 20 for accessing a first server.

According to the invention, a first device 12 is coupled or connected to a first server 16. The method comprises the following steps. The first device captures, at at least one predetermined time and/or during at least one predetermined time period, at least one signal, the at least one signal being emitted at a place 110 where the first device is located. The first device, the first server or a second server compares each of the at least one captured signal to each of at least one predetermined signal respectively. And if each of the at least one captured signal does or does not match each of the at least one predetermined signal respectively, then the first device, the first server or the second server authorizes or forbids to access the first server respectively.

The invention also relates to corresponding first device and system.

## Description

### Field of the invention:

The invention relates generally to a method for accessing a server. Furthermore, the invention also pertains to a device for accessing a server. Finally, the invention also relates to a system for accessing a server.

### State of the art:

A known solution allows accessing a server by supplying from a Personal Computer (or PC) a user name and a corresponding password, as user credentials.

The user credentials allows the server to identify and authenticate the PC user.

Once the server has authenticated the PC user, the server authorizes access to the server that stores or accesses data and/or an application(s).

It is known to detect, on a basis of a Global Positioning System (or GPS), a presence of a PC in a particular geographical position.

However, the GPS has a very bad coverage indoor due to walls that surround the PC.

Thus, there is no way to know whether the PC is or is not present in a room that is included within a flat, a house or a building.

There is a need to provide a solution that allows knowing whether the PC is or is not present notably within a confined space, so as to access a server.

### Summary of the invention:

The invention proposes a solution for satisfying the just herein above specified need by providing a method for accessing a server.

According to the invention, a first device being coupled or connected to a first server, the method comprises the following steps. The first device captures, at at least one predetermined time and/or during at least one predetermined time period, at least one signal, the at least one signal being emitted at a place where the first device is located. The first device, the first server or a second server compares each of the at least one captured signal to each of at least one predetermined signal respectively. And if each of the at least one captured signal does or does not match each of the at least one predetermined signal respectively, then the first device, the first server or the second server authorizes or forbids to access the first server respectively.

The principle of the invention consists in using, at a requesting side, one or several signals that are locally emitted, to be collected locally and to be recognized at the requesting side or at a server side, so as to detect a presence of a first device, at the requesting side, in a predefined location.

Thus, the signal(s) that is(are) locally emitted is(are) associated with a location where the first device has to be, so as to grant access to the first server.

It is to be noted the signal(s) that is(are) emitted where the first device is also located may be of any type.

It is noteworthy that either the first device, the first or a second server, as authentication device, carries out a comparison between a collected signal(s) and a reference (or predetermined) signal(s) that is(are) associated with a location(s) where the first device has to be.

A recognition or an authentication of a predefined location is based upon a matching between a collected signal(s) and a reference (or predetermined) signal(s) or pattern(s) that is(are) associated with the predefined location.

When a reference(s) (or predetermined) signal(s) that is(are) associated with a predefined location(s) is not recognized further to a comparison(s), the first device being thus not present at any predefined location, no access to the server is granted.

The invention allows ensuring a presence of the first device in a predefined location that has been recognized as authorized and thus securing access to the first server.

According to a further aspect, the invention is a first device for accessing a first server.

According to the invention, the first device being coupled or connected to a first server, the first device is adapted to capture, at at least one predetermined time and/or during at least one predetermined time period, at least one signal, the at least one signal being emitted at a place where the first device is located.

As first device, it may be a (user) terminal, like a PC, or a token coupled or connected to a PC, as hosting device, that incorporates and/or accesses means for capturing at least one predetermined signal.

As token, it may be a Universal Serial Bus (or USB) type dongle, a smart card, as removable token, to be coupled to a terminal or a chip intended to be fixed, possibly in a removable manner, to a terminal, as hosting device.

According still to a further aspect, the invention is a system for accessing a first server.

According to the invention, the system comprises at least a first device and at least one server, the first device being coupled or connected to a first server. The first device is adapted to capture, at at least one predetermined time and/or during at least one predetermined time period, at least one signal, the at least one signal being emitted at a place where the first device is located. And the first server or a second server is adapted to compare each of the at least one captured signal to each of at least one predetermined signal respectively and authorize or forbid to access the first server respectively, if each of the at least one captured signal does or does not match each of the at least one predetermined signal respectively.

As first device, it may include, among others, a PC, a mobile (tele)phone, a tablet, a handset, a desktop, a laptop, a camera, a game player or any other device that is able to access a first server.

### Brief description of the drawings:

Additional features and advantages of the invention will be more clearly understandable after reading a detailed description of one preferred embodiment of the invention, given as an indicative and non-limitative example, in conjunction with the following drawings:
- Figure 1 illustrates a simplified diagram of one embodiment of a system for accessing a remote server, the system including a PC connected to the server, the server and a USB type dongle, as token, a presence of which is surveyed at the PC on a basis of a detection of a predefined sound signal associated with an authorized location of the token, according to the invention; and
- Figure 2 represents an example of one message flow between the server, the PC and the token of Figure 1, so as to grant, only when the token is present at a recognized location, access to the server.

### Detailed description:

Herein under is considered a case in which the invention method for accessing a server is implemented by a USB type dongle, as removable token and device for accessing a server, that is coupled to a PC, as user terminal and hosting device.

Within the present description, a token is a smart object that is intended to communicate with the outside world.

Naturally, the herein below described embodiment is only for exemplifying purposes and is not considered to reduce the scope of the invention.

For example, instead of being a USB type dongle, the token may be a smart card or any other electronic medium that may have different form factors while including a chip.

According to another embodiment, the token is a chip soldered, possibly in a removable manner, to a PC, as host(ing) device.

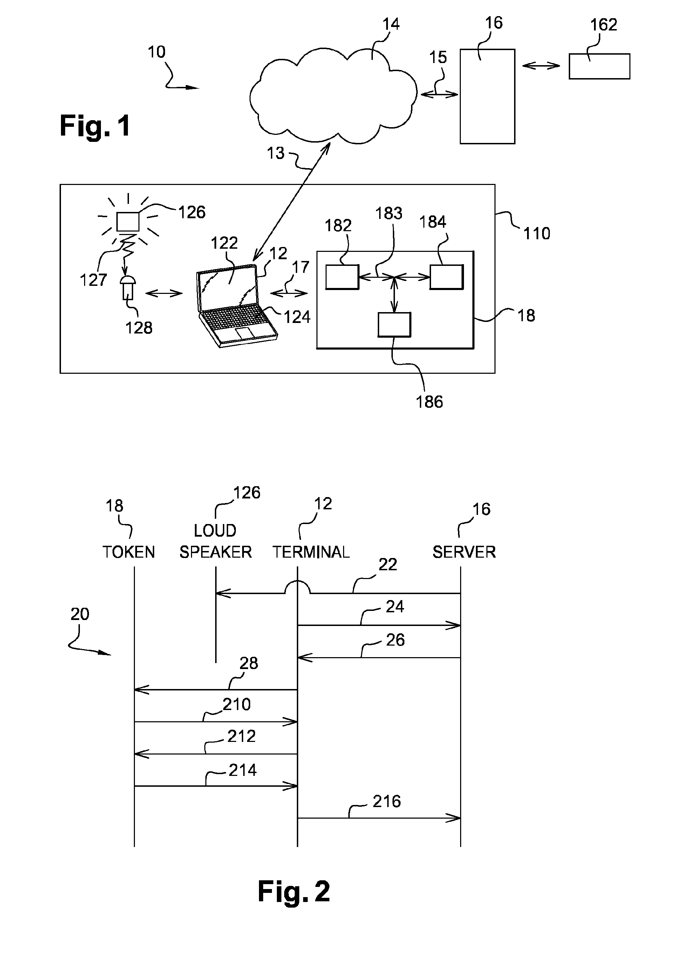

**Figure 1** shows schematically a system 10 for accessing a server.

Such a system 10 includes, at a requesting side, a PC 12, as user terminal, a USB type dongle 18, as removable token, and, at a server side, a remote web server 16.

For sake of simplicity, the remote web server 16 and the USB type dongle 18 are termed hereinafter the server 16 and the token 18 respectively.

The token 18 is connected, through a wire link 17, to the PC 12, as user terminal.

The wire link 13 is constituted by, for instance, a USB type link.

According to another embodiment (not represented), the token is coupled, over a short range Radio-Frequency (or RF) link, as contact-less link, to the user terminal. The contact-less link may be constituted by, for instance, a Near Filed Communication (or NFC), Bluetooth or Wifi type link.

A PC user (not represented) who owns the token 18 may have subscribed to access the server 16. The token 18 user is also the PC 12 user.

The PC user desires to access the server 16.

Only one PC 12/token 18 pair is represented for clarity reason.

However, the server 16 is connected to a plurality (or fleet) of such user terminal/token pairs.

The PC 12 and the token 18 are both situated within a room 110 of a building.

The room 110 is, for instance, a secure area, i.e. accessible only to one or several persons, like allowed employee(s) of a company.

As further described infra, the server 16 carries out an authentication of a location where the token 18 is situated. To authenticate or not the token location, the server 16 decides on a basis of one signal that is emitted within the room 110, and then captured by the token 18 and compared by the server 16 to a predetermined signal or pattern associated with an authorized location. When a signal that is emitted at the token location matche(s) a reference or predetermined signal or pattern, one by one, the server 16 authorizes the PC 12 to access the server 16.

According to another embodiment, instead of the server, the token, as device for accessing the server, carries out an authentication of a location where the token is situated and decides to authorize (or forbid) access when the token location does correspond (or does not correspond respectively) to an authorized location.

According to still another embodiment (not described), instead of the server, the PC, as standalone entity and device for accessing a server, i.e. without any cooperation with a token coupled or connected to the PC, controls, on its own or in cooperation with the server or another server, as authentication server, access to the server that the PC user desires to access.

A loudspeaker 126, as means for emitting one or several signals to be recognized, is present within the room 110, as confined space.

Instead of a confined space, the PC, the token and the means for emitting one or several signals to be recognized are all present within a non-confined space.

The loudspeaker 126 allows emitting to its surrounding environment one or several sound signals 127 to be retrieved by the server 16.

The loudspeaker 126 is, for instance, incorporated within another PC (not represented) relating to an administrator. The PC relating to an administrator is separate from the PC 12. Such an embodiment allows accessing a service offered from or through the server 14 only when the PC relating to an administrator is connected to the server 14. The loudspeaker 126 is independent from the PC 12.

According to another alternative, the loudspeaker is not coupled or connected to the PC 12.

According to still another alternative, the loudspeaker is connected to the server 14, i.e. with or without the PC 12, as intermediary entity between the server 14 and the loudspeaker. When connected to the loudspeaker, the server 14 controls this latter and is able to let it emit a sound signal(s).

The PC 12 is connected, through a data communication network(s) 14, like an Internet network, an Intranet network and/or a mobile radio-communication network(s), to the server 16 that the PC user desires to access.

The server 16 is connected, through a wire or wireless link 15, to the communication network 14.

The server 16 may be included within an OTA (acronym for "Over The Air") and/or an OTI (for "Over The Internet") platform(s).

The server 16 is hosted by a computer.

The server 16 plays a first role, as server desired to be accessed, and a second role, as location authentication server. The location authentication server does or does not authenticate a location from which the server 16 is allowed to be accessed. Such a location authentication depends on a result of a comparison between a signal(s) to be received from a location occupied by the token 18 and a predetermined signal(s) that is(are) emitted at an authorized location(s).

The server 16 constitutes one and the same server. The server 16 that the token 18 user desires to access and that does (or does not) recognize the signal(s) 127 that is(are) emitted at the token 18 location or place.

According to another embodiment (not represented), instead of a single server, the server that the user desires to access and the server that authenticates a location where the token 18 is present are two separate servers. Each of the two servers may be thus dedicated to carrying out a separate function(s).

The server 16 includes a microprocessor (not represented), as data processing means.

The server 16 is preferably able to identify a PC user.

The server 16 is also preferably able to authenticate her/him, based on, for instance, a user identifier and a password, as user credentials to be supplied automatically by a server interlocutor, like the PC 12 or the token 18. Such a user authentication allows preventing access to an unauthorized person(s).

The server 16 includes or accesses one or several memory(ies) 162.

The server memory 162 stores non-executable data. The server memory 162 may store sensitive data, like confidential data relating to a company work or activity.

The server memory 162 may store executable data, as one or several applications.

The server memory 162 stores a first list of one or several predetermined signals or patterns. Each predetermined signal is to be emitted through corresponding means that is situated within an authorized area or space and received back, through the token 18 and/or the PC 12, that are present within the authorized area.

There may be different patterns for one or several signals that are sent consecutively and randomly to the loudspeaker 126, so as to better protect the signals to be emitted while avoiding a replay by an attacker that spies the emitted signals.

Such different patterns to be randomly emitted constitute different sequences to be distributed in different locations depending on the desired security level.

The first list comprises one or several elements of a group that includes:
- one or several sound signals,
- one or several light signals,
- one or several air wind signals,
- one or several mechanical vibration signals,
- one or several discrete temperature values of an ambient environment, and/or
- other signal(s) that may be emitted and captured at a place where the token 18 is located.

The sound signal(s) may include non-audible signal(s). The PC 12 and token 18 user is not disturbed when the emitted signal(s) is(are) non-audible. The PC 12 and token 18 user is not aware about a corresponding pending emitting signal. The PC 12 and token 18 user is therefore not aware about a corresponding pending authentication of the location where she/he should be present.

The light signal(s) may include non-visible signal(s). The PC 12 and token 18 user is not disturbed when the emitted signal(s) is(are) non-visible. The PC 12 and token 18 user is not aware about a corresponding pending signal emitting event(s). event(s) The PC 12 and token 18 user is therefore not aware about a corresponding pending authentication of the location where she/he should be present.

The server memory 162 may store a corresponding second list of one or several predetermined secure area associated with a list of one or several predetermined signals or patterns. Each predetermined secure area of the second list is associated with one or several predetermined signals or patterns of the first list.

The server 16 is preferably adapted to send to means for emitting signal(s), like a loudspeaker 126, one or several predetermined signals, such as a sound signal. Thus, the server 16 is able to let emit, at one or several predetermined times and/or during one or several predetermined time periods, predetermined signal(s), like sound signal(s), locally in a space where a user terminal, as hosting device, and a user token are supposed to be located to access the server 16. The predetermined signals relate to authorized locations. Each predetermined signal may be associated with one authorized location.

The server 16 is preferably arranged to compare each captured signal, like a captured sound signal and/or a captured light signal, to each predetermined signal, like a predetermined sound signal and/or a predetermined light signal. When several signals, like a sound signal and a light signal, are emitted simultaneously, they are to be captured and compared to the corresponding predetermined signals, one by one. Such a simultaneous use of different signals to be recognized allows increasing a desired security level.

The server 16 is also preferably arranged to authorize (or forbid) to access the server 16 if the captured signal(s) match(es) the predetermined signal(s) that have been previously emitted where the server interlocutor is.

For instance, as soon as the server 16 carries out a comparison(s) between a captured sound(s) and predetermined sound(s) relating to an authorized location(s) and obtains a corresponding successful or unsuccessful comparison result, the server 16 may be able to send to the server interlocutor information relating to the success or non-success of a location authentication.

In case of a non-success of the location authentication, the server 14 may limit access to the server 14, for instance, by restricting access only to public information.

The server memory 162 may include several memory areas. Each memory area is associated with one or several specific predetermined signals or patterns. For instance, a first memory area of the server memory 162 stores data restricted in access while a second memory area of the server memory 162 stores confidential data that is less restricted in access. The first memory area of the server memory 162 is, for instance, associated with the room 110, as first room, while the second memory area of the server memory 162 is, for instance, associated with a second room (not represented).

The server 16 may support an application(s) that the server memory 162 stores. When the server microprocessor runs a supported application, the server 16 provides a service requested, through the PC 12, by the PC user. A requested service may be a service for accessing, in a remote manner, an application, as work tool allowing to work in premises of an employer of the PC user. For instance, the PC user may be a developer of a software program and needs to access securely, through the server 16, to a corresponding source code(s).

To restrict access only to a user who desires accessing the first server 16 and is located, like her/his token 18, in a secure area, the server 16 is used for authenticating a secure area occupied by the token 18 from which the server 16 authorizes to be accessed.

The server memory 162 may store one or several terminal Internet Protocol (or IP) addresses, like a PC 12 IP address, one or several subscriber identifiers, like an International Mobile Subscriber Identifier (or IMSI), and/or other identifier(s) relating to the server 16 interlocutor(s).

The server memory 162 stores preferably, for each user, the user credentials, like a user identifier and/or a password. The user credentials are preferably to be submitted to the server 16, so as to authenticate the user, as authorized server interlocutor.

The server memory 162 may store one or several user prints, like finger print(s), as user authentication data to be submitted to the server

The server memory 162 stores preferably one key(s), said first key, k1.

The server 16 uses the first key k1 for encrypting and/or decrypting data to be exchanged with each server interlocutor, so as to prevent disclosure of the data thus exchanged.

The stored key k1 is shared with either the PC 12 or the token 18 coupled to the PC 12, as server interlocutor. The shared key k1 may be a private key, as symmetric key. Alternately, the shared key k1 may be a public key, as asymmetric key.

The server 16 is therefore able to protect data exchanged with its interlocutor.

Optionally, prior to a sending of data to its interlocutor, the server 16 is arranged to apply to data to be sent an integrity algorithm to be used to protect the data in its integrity. Thus, the server interlocutor, either a PC 16 or a token 18 coupled to the PC 16, is able to detect whether the received data has or has not been modified or altered.

Optionally, the server 16 is arranged to sign data to be sent to its interlocutor. Such a signature allows authenticating (or proving that) a sender of the data, namely the server 16. To sign data to be sent, the server 16 encrypts it by using a predetermined encryption algorithm and a predetermined encryption key that are both stored within the server memory. The encryption key is preferably related to the server 16, as private key. The interlocutor, either the PC 12 or the token 18, decrypts corresponding encrypted data by using a predetermined decryption algorithm and a predetermined decryption key that are both stored within the server interlocutor memory 162. The decryption key is preferably a public key relating to the server 16 that has been deduced from the server private key. According to one embodiment, the encryption key and the decryption key constitute one and the same key, as a key shared between the server 16 and its interlocutors, namely a fleet of PCs or tokens. According to another embodiment, the encryption key and the decryption key constitute two separate keys, like one private key and one corresponding public key in a Public Key Infrastructure, that is shared between the server 16 and its interlocutors.

The server 16 may be able to delegate to another server, as second server (not represented) connected to the server 16 one or several security functions, like location authentication, user authentication, data decryption, data encryption, signature, verification of data integrity, and/or application to data of an integrity algorithm.

The server 16 is accessible from at least the PC 12, as user terminal. The server 16 may be also accessible from at least one handset, like a mobile (tele)phone, as user terminal.

The server 16 may be accessible, via one or several data communication networks 14, from a user terminal(s).

According to another embodiment (not represented), instead of a remote server, the server is a local server. The local server is embedded within an entity, like a token, and is locally accessible, i.e. up to 10 m via a short range RF link, from the PC 12, as user terminal.

The PC 12 is connected, through a bi-directional wire link 13, over the data communication network(s) 14, to the server 16.

Such a bi-directional wire link 13 enables to exchange data in two ways between the PC 12 and the data communication network 14.

Alternately, instead of a wire link, the link may relate to a long range RF link(s). The long range RF link(s) may be fixed at several hundreds of MHz, for instance, around 850, 900, 1800, 1900 MHz, 2 GHz or more.

The long range RF link(s) may be related to a Wi-Fi type technology that allows exchanging typically data, at a frequency of 2.4 GHz.

Alternately, instead of a wire link, the link may relate to a short range RF link(s).

The short range RF link(s) may be fixed at a frequency of 13.56 MHz that allows exchanging data typically up to 20 cm.

The short range RF link(s) may be related to an NFC type technology compliant with International Organization for Standardization (or ISO) 14443.

The short range RF link(s) may be related to a Bluetooth type technology that allows exchanging data typically up to 10 m.

The PC 12 is preferably equipped with a Man Machine Interface (or MMI).

Alternately, instead of incorporating a, the PC 12 is connected to a separate MMI.

The PC 12 includes preferably a display screen 122 and a keyboard 124, as Man Machine Interface (or MMI).

According to a particular embodiment (not represented), instead of two separate elements as MMI, the PC 12 includes a touch sensitive display screen that displays a virtual keyboard, when activated.

The PC 12 is preferably equipped with or connected to one (or several) microphone 128, as means for capturing one or several signals.

The microphone(s) 128 allow(s) capturing a sound signal(s) of its surrounding environment. The microphone 128 is able to capture a sound signal(s) originating from the loudspeaker 126.

The PC 12 includes a microprocessor (not represented), as means for processing data, at least one memory (not represented) for storing data and at least one Input/Output (or I/O) interface (not represented) for exchanging data with the outside of the PC 12.

The PC 12 microprocessor may run a (web) browser that is stored either within the PC 12 memory or the token 18. The browser allows the PC user to access the server 16.

The PC 12 memory(ies) may store one or several predetermined sound signals, one or several light signals and/or other predetermined signals relating to one or several authorized token locations.

The token 18 is connected, through a bi-directional contact link 17, like a USB type link, to the PC 12.

According to another embodiment, the token 18 is connected, through a contact-less link(s), i.e. a short range RF link, to the PC 12. Such a short range RF link(s) is(are) used for exchanging, between the PC 12 and the token 18, data at a short range distance. The RF link may be fixed, for instance, at 13,56 Mhz for NFC with a typical range up to around 20 cm, at 2,4-2,5 GHz with a typical range of around 10 m to around 100 m (for Zigbee (e.g. IEEE 802.15.4), Wi-Fi and Bluetooth or Bluetooth low energy (e.g. IEEE 802.15.1)) and/or from around 2,4 GHz to around 10 GHz (for Ultra Wide Band or UWB e.g. IEEE 802.15.4a).

Instead of using an external microphone to which the token is connected, the token 18 may incorporate one or several microphones, as means for capturing sound signals that are present within a surrounding token 18 environment.

The token 18 includes a chip (not represented). The chip includes at least one microprocessor 182, as data processing means, at least one memory 184 and at least one I/O interface 186 that are internally all connected, through an internal bidirectional data bus 183, to each other.

The token microprocessor 182 processes, controls and communicates internally data, with all the other components incorporated within the chip and, through the I/O interfaces 186, with the chip exterior.

The token microprocessor 182 executes or runs one (or several) application(s).

As application, there is at least one application for accessing a service.

The token I/O interface 186 allows communicating data from the internal chip components to the chip exterior and conversely.

The token memory 184 stores preferably one or several keys, among which the first key k1, as shared with the server 16.

The token memory 184 stores preferably a Personal Identity Number (or PIN), biometric data and/or other user authentication data, so as to authenticate an authorized user.

The token memory 184 may store user credentials to be used. The user credentials may include a subscriber identifier(s), like an International Mobile Subscriber Identifier (or IMSI), and one or several keys, like ki, allowing to identify and authenticate a subscriber to one or several radio communication networks. The user credentials are used for authenticating the token user to a concerned external entity(ies) supporting the application requested by the user. The user credentials may include a user identifier and/or a password.

The token memory 184 may store one or several predetermined sound signals, one or several light signals and/or other predetermined signals relating to one or several authorized token locations.

The predetermined signal(s) relating to one or several authorized token locations has(have) been defined and stored within the token memory 184 during a configuration phase.

The token memory 184 may store data relating to a Uniform Resource Identifier (or URI), a Uniform Resource Locator (or URL) and/or an Internet Protocol (or IP) address of an entity, like a server to be accessed, as server identifier(s).

The token memory 184 may store one or several applications.

The token microprocessor 182 is preferably able to initiate actions, in order to interact directly with the outside world, in an independent manner of its hosting device, like the PC 12. Such a capacity of interaction at the initiative of the token 18 is also known as proactive capacity.

The token 18, as secure element, is preferably adapted to capture, at one or several predetermined times and/or during one or several predetermined time periods, one or several signals, like a sound signal and/or a light signal, that are emitted at a location or place where the token 18 is situated.

The token 18 may be adapted to compare one or several signals locally captured to predetermined signals relating to the authorized hosting device and/or token location(s) respectively. The token 18, instead of a server, may be arranged to compare each captured signal, like a captured sound signal and/or a captured light signal, to each predetermined signal, like a predetermined sound signal and/or a predetermined light signal, relating to an authorized location(s). The token 18 stores the predetermined signals to be matched.

Depending on a comparison result, the token 18, instead of a server, may be adapted to authorize or forbid to access a server that is requested to be accessed.

The token 18 is thus able to send, at its own initiative, through the host device, to any device connected to the PC 12, for instance, a proactive command for sending either a command, like an access request or service request, like user data or captured data, to the server 14, as entity to be accessed to obtain data or a service requested by the user. The token 18 may therefore send captured data to the server 14 or another server or another entity connected to the PC 12.

The token microprocessor 182 executes preferably additional security functions.

The security functions may include a user authentication operation that has to be carried out, so as to access the token memory 184. Such a user authentication operation may consist in verifying that data submitted by an authorized user, such as a PIN and/or a fingerprint(s), matches predetermined data that the token memory 184 stores.

The security functions may include a user authentication data transfer from the token 18 to an entity to be accessed, so as to benefit from a service to be requested. Such a user authentication data transfer may consist in submitting automatically user credentials to an entity, like the server 14, supporting an application requested by the user.

The security functions may include an encryption/decryption process to be used before sending data to outside/after receiving data from outside, so as to protect access to data managed by the token 18. To encrypt data to be sent, the token 18 uses the first key, k1, as encryption key, and an encryption algorithm, such as an Advanced Encryption Standard (or AES), a Data Encryption Standard (or DES) or the like, that are stored within the token memory 184. To decrypt data to be received, the token 18 may use a decryption key and a decryption algorithm, such as an AES, a DES or the like, that are stored within the token memory 184.

The security functions may include a data signature process to be used prior to a sending of data, so as to prove an origin of data from the token 18. To sign data, the token 18 encrypts it by using predetermined encryption algorithm and key that are both stored within the token memory 184. The encryption key is related to the token 18, as private key. The interlocutor, i.e. an entity supporting an application to be accessed, decrypts corresponding encrypted data by using predetermined decryption algorithm and key that are both stored within a memory accessible from the entity supporting the application to be accessed. The decryption key is preferably a public key relating to the token 18 that has been generated from the token private key. According to one embodiment, the encryption key and the decryption key constitute one and the same key, as a key shared between the token 18 and its interlocutor, an entity supporting the application requested by the user.

The security functions include preferably an integrity verification process to be used to data after its reception, so as to detect whether received data is or is not modified or altered.

The security functions include preferably an integrity application process to be used to data prior to its sending, so as to allow a corresponding addressee to detect whether data received from the token is or is not modified or altered.

**Figure 2** depicts an exemplary embodiment of the invention method 20 for accessing a server 14 accessible, through the token 18, by the PC 12.

It is assumed that the user, the PC 12, the token 18 and the loudspeaker 126 are all physically present within the room 110.

It is assumed that the server 14 controls the loudspeaker 126.

It is assumed that a non audible signal, like SOUND 1, is stored or accessible by the server 14 in an associated manner with the room 110, as an authorized location.

The PC 12 and the server 14 exchange by using a HyperText Transfer Protocol (or HTTP) or HTTPSecure (or HTTPS) type protocol. The PC 12 and the server 14 may use any other data exchange protocol allowing to transfer data between them.

Firstly, the server 14 sends to the loudspeaker 126 a non audible signal 22, like SOUND 1, that is stored at the server 14 side. The non audible signal is stored or accessible by the server 14 in an associated manner with a room(s), at least the room 110.

The loudspeaker 126 emits permanently or at least temporarily the received non audible signal.

After a user application selection through the PC MMI, the PC 12 sends to the server 14 a connection request 24, like an HTTP command like "get data".

Once connected, the server 14 sends preferentially to the PC 12 a request (not represented) for getting user credentials. Then, the PC 12, after a possible previous request (not represented) to either the token 18 or the user, sends back to the server 14 user credentials (not represented). The user credentials are preferably stored within either the PC 12 or the token memory 184. The server 14 compares the submitted user credentials to the expected pre-registered user credentials which are accessible at the server 14 side. Only, when the submitted user credentials do match the expected user credentials, the server 14 authorizes the registered user 12 to access data and/or a service that the user requests.

The server 16 sends to the PC 12 a request 26 for capturing locally sound signal that is intended to the token 18. Such a capturing request 26includes the capturing parameters, like at one or several specified times and/or during one or several time periods. Such a capturing request 26 may be accompanied with an index relating to the predetermined signal to be retrieved at the token 18 side notably if the token 18 is adapted to compare a captured sound signal with the emitted sound signal that is identified on a basis of the signal index.

The PC 12 forwards to the token 18 the request 28 for capturing locally sound signal possibly accompanied with the signal index.

The token 18 sends to the PC 12 a request 210 for capturing a sound signal.

The PC 12 sends back to the token 18 a captured sound signal 212.

The token 18 stores the captured sound signal, as captured data.

The token 18 encrypts preferably the captured sound signal by using the first key k1.

The token 18 sends to the PC 12 an encrypted captured sound signal 214.

The PC 12 sends to the server 14 the encrypted captured sound signal 216.

The server 14 decrypts preferably the encrypted captured sound signal, as received from the token 18 by using the first key k1.

The server 14 compares the captured sound signal, as received signal, to the emitted sound signal.

If the received sound signal does not match the emitted sound signal, then the server 14 forbids to access data and/or a service accessible from the server 14. Further to a non recognition of an authorized location, the server 16 may either close a connection opened by the PC 12 or disallow a service offered from or through the server 14. A token location is considered as being a non-authorized location. Thus, the token user is disallowed to continue on communicating data with the server 14.

Otherwise, i.e. when the received sound signal does match the emitted sound signal, the server 14 authorizes to access data and/or a service accessible from the server 14. The server 14 may send to the PC 12 an information message (not represented) intended to the token 18 user and comprising data relating to a successful location authentication, like "OK", as positive response to the connection request 24. The PC 12 user is permitted to access a requested server on a basis of a recognition of a sound signal relating to the room 110, as one authorized location.

Further to a recognition of an authorized location, the server 16 authorizes to continue a connection opened from the PC 12 to the server 14. A token location is considered as being an authorized location. Thus, the token user is allowed to continue on communicating data with the server 14.

At least another request for getting a location authentication challenge (not represented) may be exchanged between the server 14 and the token 18.

As soon as the user, its token 18 and its PC 12 leave the room 110 for a certain time period during which the server 14 detects that the token 18 is away since the token 18 does no more upload any captured signal, the server 14 triggers a closure of the connection open between the PC 12 and the server 14.

The embodiment that has just been described is not intended to limit the scope of the concerned invention. Other embodiments may be given. As another embodiment example, instead of a single type of signal, several different types of signals, like a non-audible sound signal and a non-visible light signal, are emitted and to be received back by the location authentication device, so as to authorize the PC 12 to access the server 14. The location authentication device thus verifies whether the token 18 is or is not physically present at a place where emitted signals match captured signals, one by one. As another embodiment example, instead of the token 18, a user terminal, like the PC 12, as standalone entity, constitutes a device for accessing a server that carries out the functions that are carried out by the token 18 as described supra.

## Claims

1. A method (20) for accessing a first server,
**characterized in that**, a first device (12) being coupled or connected to a first server (16), the method comprises the following steps:
- the first device captures, at at least one predetermined time and/or during at least one predetermined time period, at least one signal, the at least one signal being emitted at a place (110) where the first device is located,
- the first device, the first server or a second server compares each of the at least one captured signal to each of at least one predetermined signal respectively; and
- if each of the at least one captured signal does or does not match each of the at least one predetermined signal respectively, then the first device, the first server or the second server authorizes or forbids to access the first server respectively.

2. Method according to claim 1, wherein the first device or a token coupled or connected to the first device stores the at least one predetermined signal.

3. Method according to claim 1 or 2, wherein the method further comprises a user authentication step in which the first device or a token coupled or connected to the first device sends to the first server user authentication data.

4. Method according to any of claims 1 to 3, wherein the first server or the second server being connected to means (126) for emitting the at least one signal, the first server or the second server sends the at least one signal to the means for emitting the at least one signal.

5. Method according to any of claims 1 to 4, wherein the first device or a token being coupled or connected to the first device storing a first key, the first server or the second server storing or accessing the first key, the method further comprises the following steps:
- the first device or the token encrypts each of the at least one captured signal by using the first key;
- the first device or the token sends to the first server or the second server each of the at least one encrypted captured signal;
- the first server or the second server decrypts each of the at least one encrypted captured signal by using the first key.

6. Method according to any of claims 1 to 5, wherein the at least one signal includes at least one element of a group comprising:
- at least one sound signal;
- at least one light signal;
- at least one air wind signal;
- at least one mechanical vibration signal; and
- at least one discrete temperature value of an ambient environment.

7. Method according to claim 6, wherein the at least one sound signal is at least one non-audible sound signal.

8. A first device (12 or 18) for accessing a first server,
**characterized in that**, the first device being coupled or connected to a first server (16), the first device is adapted to capture, at at least one predetermined time and/or during at least one predetermined time period, at least one signal, the at least one signal being emitted at a place where the first device is located.

9. First device according to claim 8, wherein the first device is adapted to:
- compare each of the at least one captured signal to each of at least one predetermined signal respectively; and
- authorize or forbid to access the first server respectively if each of the at least one captured signal does or does not match each of the at least one predetermined signal respectively.

10. A system (10) for accessing a first server,
**characterized in that**, the system comprising at least a first device (12) and at least one server, the first device being coupled or connected to a first server (18),
**in that** the first device is adapted to capture, at at least one predetermined time and/or during at least one predetermined time period, at least one signal, the at least one signal being emitted at a place where the first device is located, and
**in that** the first server or a second server is adapted to:
- compare each of the at least one captured signal to each of at least one predetermined signal respectively; and
- authorize or forbid to access the first server respectively, if each of the at least one captured signal does or does not match each of the at least one predetermined signal respectively.
